# EUROPÄISCHE PATENTSCHRIFT

(11) **EP 3 308 941 B1**
(45) Veröffentlichungstag und Bekanntmachung des Hinweises auf die Patenterteilung: **28.07.2021**
(21) Anmeldenummer: 16193744.6
(22) Anmeldetag: 13.10.2016
(51) Int. Cl.: B29C 48/694, B29C 48/25, B29C 48/27

(54) **VORRICHTUNG UND VERFAHREN ZUR FILTRATION VON KUNSTSTOFFSCHMELZE**
APPARATUS AND PROCESS FOR FILTERING POLYMER MELTS
APPAREIL ET PROCÉDÉ POUR FILTRER LE POLYMÈRE FONDU

(43) Veröffentlichungstag der Anmeldung: 18.04.2018
(73) Patentinhaber: Starlinger & Co. Gesellschaft m.b.H., 1060 Wien (AT)
(72) Erfinder: Lovranich, Christian, 2564 Weissenbach an der Triesting (AT); Uhl, Christopher, 2493 Eggendorf (AT); Weberhofer, Christoph, 2564 Furth an der Triesting (AT); Pechhacker, Andreas, 2571 Altenmarkt (AT)
(74) Vertreter: Schwarz & Partner Patentanwälte OG

(56) Entgegenhaltungen:
- WO-A1-02/42054
- WO-A1-02/056997
- DE-A1- 19 636 067
- JP-A- H10 244 576
- US-A- 2 440 487
- US-A- 3 670 895
- US-A- 3 896 029
- US-A- 4 191 648
- US-A- 4 921 607
- US-A- 5 279 733
- US-A- 5 462 653

## Beschreibung

Die Erfindung betrifft eine Vorrichtung zur Filtration von Kunststoffschmelze.

Es sind Vorrichtungen zur Filtration, insbesondere zur Großflächenfiltration, von Kunststoffschmelze bekannt, bei denen zur Filtration der Kunststoffschmelze eine in einem Filterkanister angeordnete Filterkerze herangezogen wird, wobei so eine Filterkerze im allgemeinen durch einen Filterträger und einen Filterstrumpf als Filtermedium gebildet ist. So eine Vorrichtung ist zumeist in einem kontinuierlichen Prozess eingebetet, bei dem Kunststoffschmelze mit einem hohen Recyclinganteil wieder zu einem hochwertigen Ausgangsprodukt, zum Beispiel Kunststoffgranulat, umgewandelt wird. Um eine andauernde hohe Qualität des Ausgangsprodukts gewährleisten zu können und um ein Verblocken der Filterkerze zu verhindern, muss der Filterstrumpf der Filterkerze regelmäßig getauscht werden, was zu einer regelmäßigen Unterbrechung des Prozesses führt und personellen Aufwand nach sich zieht.

Eine oben beschriebene Vorrichtung ist zum Beispiel aus der Druckschrift CN 102241125 B bekannt, wobei die Vorrichtung bekannt aus CN 102241125 B zwei Filterkerzen aufweist, die jeweils in voneinander unabhängigen Filterkanistern angeordnet sind. Die Filterkanister sind jeweils über einen Schmelzekanal an ein Einlassventil angebunden, wobei über das Einlassventil nur jeweils zu einem der beiden Filterkanister Kunststoffschmelze zugeführt werden kann. Somit wird im Filterbetrieb der Vorrichtung nur immer ein Filterkanister mit Kunststoffschmelze beaufschlagt und der andere Filterkanister, der nicht mit Kunststoffschmelze beaufschlagt wird, kann während dessen gereinigt werden und der Filterstrumpf der Filterkerze kann getauscht werden.

Bei der Vorrichtung bekannt aus der Druckschrift CN 102241125 B hat sich als nachteilig erwiesen, dass die Vorrichtung sehr groß ausgebildet werden muss um eine ausreichend große Filterfläche zum Filtern der Kunststoffschmelze zu erhalten, damit die Wechselintervalle eines Filterstrumpfes einer Filterkerzen angeordnet in einem Filterkanister möglichst weit auseinander liegen. Durch die Größe der Vorrichtung wird aber sehr viel Einbauraum benötigt und es hat sich als schwierig erwiesen die Vorrichtung so als Teil einer größeren Anlage anzuordnen, dass genügend Raum zur Verfügung steht die Filterstrümpfe schnell und effektiv wechseln zu können. Zwar kann durch die Vorrichtung eine kontinuierliche Filtration von Kunststoffschmelze erreicht werden, aber aufgrund der kleinen Filterfläche der Vorrichtung und aufgrund des zeitaufwendigen Wechselns der Filterstrümpfe kann es bei stark verunreinigter Kunststoffschmelze vorkommen, dass eine Person zur Sicherstellung einer kontinuierlichen Filtration nur damit beschäftigt ist, die Filterstrümpfe der Filterkerzen in den Filterkanistern abwechselnd auszutauschen.

Darüber hinaus sind Vorrichtungen zur Filtration von Kunststoffschmelzen bekannt, die eine Vielzahl in einem Filterkanister angeordnete Filterkerzen aufweisen. So eine Vorrichtung ist zum Beispiel aus DE 196 36 067 A1, JP H10 244576 A und WO 02/056997 A1 bekannt.

Weitere Vorrichtungen zum Filtern von verschiedenen Medien sind aus US 5,279,733 A, US 5,462,653 A, US 4,921,607 A, WO 02/42054 A1, US 3,670,895 A und US 2,440,487 A bekannt.

US 3,896,029 A offenbart ein Ventil, welches das Umschalten zwischen zwei einzelnen Filtern erlaubt, ohne dass es zu einer Unterbrechung eines Materialflusses am Ausgang der Filter kommt.

Es ist die Aufgabe der vorliegenden Erfindung eine Vorrichtung bereit zu stellen, bei der ein personeller Aufwand sehr gering ist, um die Vorrichtung im Filterbetrieb zu halten, bei der das eingesetzte Filtermedium schnell gewechselt werden kann und bei der ungefilterter Abfall vermieden wird.

Erfindungsgemäß wird diese Aufgabestellung durch eine Vorrichtung gelöst, die ein Einlassventil, ein Auslassventil und einen Filterkanister aufweist. In dem Filterkanister ist ein Hohlraum ausgebildet, der mittels eines abnehmbaren Deckels verschließbar ist. In den Hohlraum mündet ein Schmelzekanal, wobei im Hohlraum eine Vielzahl von Filterkerzen angeordnet ist. Die Filterkerzen sind jeweils durch einen Filterträger und einen Filterstrumpf gebildet, wobei der Filterträger an dem Filterkanister verankert ist und eine Wand mit einer Vielzahl an Öffnungen umfasst, welche Wand einen Innenraum definiert, der über einen Auslass in einen Sammelkanal mündet. Der Filterstrumpf ist so geformt, dass er die Öffnungen des Filterträgers überdeckt, wobei die einzelnen Filterstrümpfe über den Deckel auf den Filterträgern fixiert sind. Vorteilhaft sind sowohl die Wand des Filterträgers als auch der Filterstrumpf hohlzylinderförmig ausgebildet. Der Schmelzekanal schließt an das Einlassventil an und ist über das Einlassventil mit einem Einlasskanal in Fluidkommunikation bringbar. Der Sammelkanal schließt an das Auslassventil an und ist über das Auslassventil mit dem Auslasskanal in Fluidkommunikation bringbar.

Die Vorrichtung weist einen mit dem Einlassventil kommunizierenden Belüftungskanal und einen mit dem Auslassventil kommunizierenden Drainagekanal auf, wobei der Schmelzekanal über das Einlassventil mit dem Belüftungskanal verbindbar ist und der Sammelkanal über das Auslassventil mit dem Drainagekanal verbindbar ist.

Das hat den Vorteil, dass der Hohlraum des Filterkanisters vor dem Wechsel der Filterstrümpfe mittels eines Gases, insbesondere Luft, frei gespült werden kann. Das Freispülen des Hohlraums erleichtert den Wechsel der Filterkerzen und es wird verhindert, dass durch den Wechsel nicht gereinigtes Material die Vorrichtung durch den Auslasskanal verlässt.

Durch die Ausbildung einer Vielzahl von Filterkerzen in einem einzigen Hohlraum des Filterkanisters ist der Vorteil erhalten, dass die Filterfläche der Vorrichtung erhöht wird und infolgedessen die Vorrichtung über einen längeren Zeitraum einsatzfähig bleibt, wobei der Filterkanister bei einer im Vergleich zu herkömmlichen Filtervorrichtungen größeren Filterfläche gleich oder sogar kleiner ausgebildet werden kann. Dadurch bedingt ist die Periode zwischen dem Wechseln der Filterstrümpfe länger und somit der personelle Aufwand geringer, um die Vorrichtung im Filterbetrieb zu halten.

Darüber hinaus sind bei der vorliegenden Erfindung sämtliche Filterstrümpfe der in dem Hohlraum des Filterkanisters angeordneten Filterkerzen durch den Deckel auf den Filterträgern fixiert. Zum Wechseln der Filterkerzen muss infolgedessen nur der Deckel abgenommen werden, wodurch die Filterstrümpfe in dem Hohlraum frei zugänglich sind und mittels eines Werkzeugs oder per Hand, natürlich unter Einhaltung entsprechender Schutzvorkehrungen, einfach von den Filterträgern abziehbar oder abnehmbar sind. Somit ist eine Wechseldauer der Vielzahl an Filterstrümpfen der Filterkerzen sehr gering.

In einer besonders bevorzugten Ausführungsform ist die Vorrichtung über einen den Filterkanister in einem Abstand umgebenden Heizbecher kontaktlos beheizbar. Hierdurch ist der Vorteil erhalten, dass der Filterkanister über einen großen Bereich beheizbar ist und trotzdem durch einfaches Entfernen des Heizbechers ein schneller Wechsel der Filterkerzen möglich ist.

Vorteilhaft sind das Einlassventil und das Auslassventil durch Dreh- und/oder Schiebeventile gebildet. Hierdurch ist der Vorteil einer einfachen Steuerung von einer Zufuhr von Kunststoffschmelze in den Hohlraum und einer Abfuhr von Kunststoffschmelze aus dem Sammelkanal gegeben. Besonders bevorzugt sind das Einlassventil und das Auslassventil elektronisch ansteuerbar.

Bevorzugt sind der Schmelzekanal und der Sammelkanal in zumindest einer Wandung des Filterkanisters im Bereich einer Seite des Filterkanisters ausgebildet. Hierdurch werden der Hohlraum des Filterkanisters und der Innenraum der Filterträger im Wesentlichen in umgekehrter Richtung, also im Gegenstrom, durch die Kunststoffschmelze im Filterbetrieb durchflossen. Daraus ergibt sich der Vorteil, dass die Vorrichtung gesamt kompakter ausgebildet werden kann. Gleichzeitig ergibt sich dadurch auch eine bessere Zugänglichkeit zum Filtermedium bzw. den Filterstrümpfen, da nicht ein zur Zufuhr von Schmelze oder Abfuhr von Schmelze ausgebildeter Kanal einem einfachen Zugang hinderlich ist.

Zweckmäßig ist der Filterstrumpf aus Metall, Kunststoff oder Keramik gebildet, wobei die Filterkerzen vorteilhaft so ausgebildet sind, dass Partikel im Wesentlichen größer als 36 µm, vorzugsweise im Wesentlichen größer als 25 µm oder noch bevorzugter größer als 15 µm, aus der Kunststoffschmelze im Filterbetrieb der Vorrichtung heraus gefiltert werden.

Vorteilhaft sind zumindest zwei der erfindungsgemäßen Vorrichtungen zu einem System zusammengefasst, wobei das System eine Steuereinheit aufweist, die die Einlassventile und die Auslassventile der Vorrichtungen steuert. Hierdurch ist der Vorteil erhalten, dass während die eine Vorrichtung zum Filtern der Kunststoffschmelze herangezogen wird, die andere Vorrichtung gereinigt werden kann. Durch die weit auseinander liegenden Wechselintervalle der Filterstrümpfe der Filterkerzen aufgrund der hohen Filterfläche der Vielzahl an Filterstrümpfen und durch die kurzen Wechselzeiten der Filterstrümpfe kann Kunststoffschmelze durch das System ohne hohen personellen Aufwand kontinuierlich gereinigt werden. Bei so einem System, insbesondere bei einem System mit mehr als zwei Vorrichtungen, besteht auch die Möglichkeit, dass die Vorrichtungen gleichzeitig betrieben werden oder dass durch Zuschalten von einzelnen Vorrichtung oder Abschalten von einzelnen Vorrichtungen die Gesamtfiltrationsfläche des Systems verändert wird. Infolgedessen kann die Gesamtfiltrationsfläche an einen Verunreinigungsgrad und eine Höhe des zur Vorrichtung zugeführten Volumenstroms an Kunststoffschmelze angepasst werden. Die Vorrichtungen sind zweckmäßig parallel zueinander ausgerichtet, wodurch der Vorteil erhalten ist, dass die Hohlräume der Filterkanister von einer Seite her zugänglich sind und somit der Wechsel der Filterkerzen erleichtert wird.

Bevorzugt erfolgt das Wechseln der Filterstrümpfe der Filterkerzen einer erfindungsgemäßen Vorrichtung durch folgende Schritte:
- Unterbrechen einer Zufuhr von Kunststoffschmelze in die Vorrichtung durch Umschalten des Einlassventils von einer den Einlasskanal und den Schmelzekanal verbindenden Stellung in eine den Belüftungskanal und den Schmelzekanal verbindenden Stellung;
- Umschalten des Auslassventils von einer den Auslasskanal und den Sammelkanal verbindenden Stellung in eine den Drainagekanal und den Sammelkanal verbindenden Stellung;
- Freispülen der Vorrichtung durch die Zufuhr von Gas durch den Belüftungskanal, wobei das Gas vorteilhaft Druck beaufschlagt ist;
- Öffnen des Deckels und falls erforderlich manuelles Abreinigen der im Filterkanister noch befindlichen Schmelzereste mit einem entsprechend der Filtergröße geformten Reinigungswerkzeug;
- Austauschen der Filterstrümpfe;
- Schließen des Deckels;
- Umschalten des Einlassventils in die Stellung in der der Einlasskanal und der Schmelzekanal verbunden sind; und
- Nach Entweichen des noch im Hohlraum befindlichen Gases durch den Drainagekanal Umschalten des Auslassventils in die Stellung in der der Auslasskanal und der Sammelkanal verbunden sind.

Weitere vorteilhafte Ausführungsvarianten der erfindungsgemäßen Vorrichtung werden in weiterer Folge anhand der Figuren näher erläutert.
Figur 1 zeigt eine Ausführungsvariante der erfindungsgemäßen Vorrichtung in einer schematischen Schnittdarstellung im Filterbetrieb.
Figur 2 zeigt die Ausführungsvariante der Vorrichtung gemäß Figur 1 entlang eines Schnitts A-A.
Figur 3 zeigt die Ausführungsvariante der Vorrichtung gemäß Figur 1 entlang eines Schnitts B-B.
Figuren 4 bis 7 zeigen die Ausführungsvariante der Vorrichtung gemäß Figur 1 in verschiedenen Konfigurationen beim Wechseln der Filterstrümpfe in schematischen Schnittdarstellungen.
Figur 8 zeigt die Ausführungsvariante der Vorrichtung gemäß Figur 1 bei abgenommenem Deckel von unten.
Figur 9 zeigt eine Ausführungsvariante eines erfindungsgemäßen Systems mit acht Vorrichtungen gemäß Figur 1 in einer schematischen Darstellung.

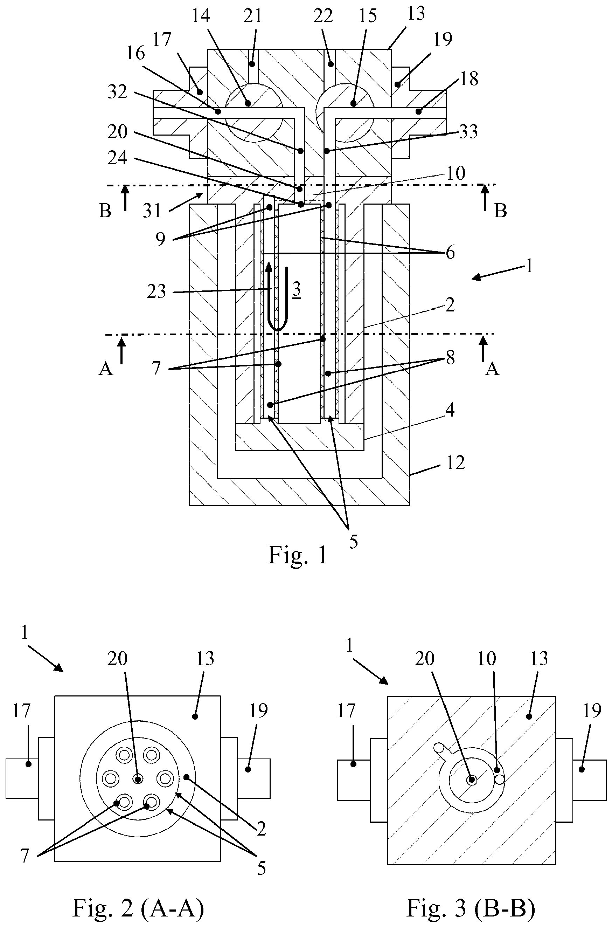

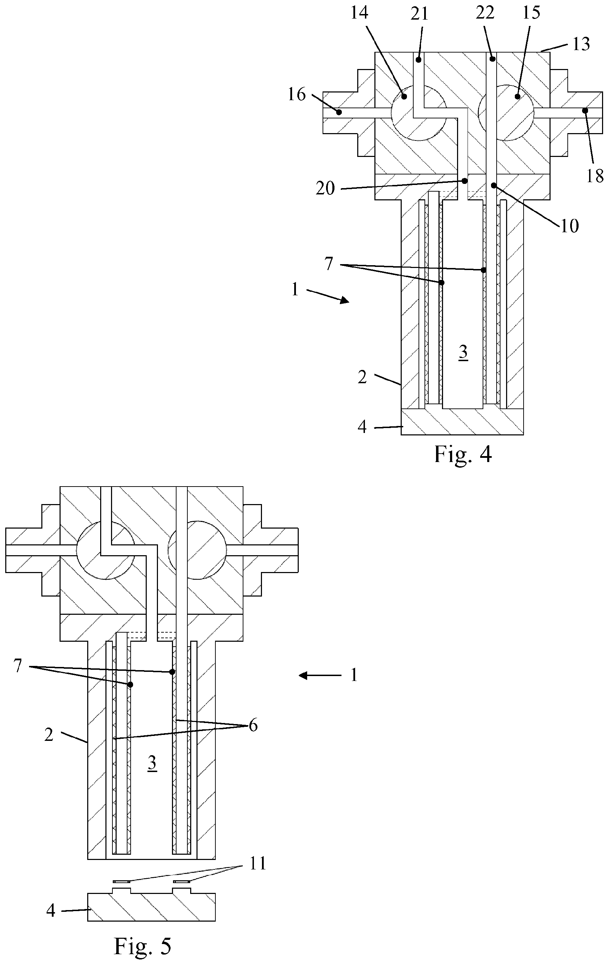

Figur 1 zeigt eine Ausführungsvariante der erfindungsgemäßen Vorrichtung 1 in einer schematischen Schnittdarstellung im Filterbetrieb. Die Vorrichtung 1 umfasst einen becherförmigen Filterkanister 2, in welchem ein zylinderförmiger Hohlraum 3 ausgebildet ist und welcher mittels eines Deckels 4 verschlossen ist. In dem Hohlraum 3 sind sechs Filterkerzen 5 angeordnet, welche Filterkerzen 5 jeweils durch einen Filterträger 6 und einen Filterstrumpf 7 gebildet sind. Die Filterträger 6 sind an dem Filterkanister 2 verankert und weisen eine zylinderförmige Wand auf, die durch ein Lochblechmaterial gebildet ist und somit eine Vielzahl von Öffnungen aufweist. Die Öffnungen sind aus Gründen der Übersichtlichkeit in den Figuren nicht dargestellt. Die Wand eines jeden Filterträgers 6 definiert einen zylinderförmigen Innenraum 8, der über einen Auslass 9 in einen in einer Wandung 31 des Filterkanisters 2 ausgebildeten Sammelkanal 10 mündet. Die Filterstrümpfe 7 weisen die Form eines dickwandigen Hohlzylinders auf und sind aus Kunststoff gebildet. In einer weiteren Ausführungsvariante sind die Filterstrümpfe 7 aus Metall, insbesondere einem Metallfaservlies, oder Keramik gebildet. Der Deckel 4 ist von dem Filterkanister 2 abnehmbar, wobei der Deckel 4 mittels mehrerer nicht dargestellter Schrauben an dem Filterkanister 2 verschraubt ist. Der Deckel 4 fixiert in verschraubten Zustand die Filterstrümpfe 7 auf den Filterträgern 6, wobei zur Vermeidung von einer Leckage zwischen den Innenräumen 8 und Hohlraum 3 Dichtungen 11 zwischen jeder Wand der Filterträger 6 und dem Deckel 4 ausgebildet sind. Die Dichtungen 11 sind in Figur 5 dargestellt. Um den Filterkanister 2 ist beabstandet zum Filterkanister 2 ein Heizbecher 12 angeordnet, der zum kontaktlosen Heizen des Filterkanisters 2 ausgebildet ist. In einer Wandung 31 des Filterkanisters 2 ist ferner ein Schmelzekanal 20 ausgebildet, der mittig in den zylinderförmigen Hohlraum 3 mündet. Hierdurch ist der Vorteil erhalten, dass sämtliche sechs Filterkerzen 5 im Hohlraum 3 gleichförmig zur Mündung 24 des Schmelzekanals 20 angeordnet sind.

Ferner weist die Vorrichtung 1 ein Schmelzverteilergehäuse 13 auf, welches an die Wandung 31 des Filterkanisters 2 anschließt und mit diesem durch nicht dargestellte Schrauben verschraubt ist. In dem Schmelzverteilergehäuse 13 sind ein Einlassventil 14 und ein Auslassventil 15 ausgebildet, wobei das Einlassventil 14 ein Schiebeventil ist und das Auslassventil 15 ein Schiebeventil ist. Das Einlassventil 14 schließt über einen Zuführkanal 32 direkt an den Schmelzekanal 20 an und das Auslassventil 15 schließt über einen Abführkanal 33 direkt an den Sammelkanal 10 an. Darüber hinaus sind in dem Schmelzverteilergehäuse 13 ein Einlasskanal 16, welcher von einem ersten Anschlusselement 17 in das Einlassventil 14 mündet, und ein Auslasskanal 18 ausgebildet, welcher von einem zweiten Anschlusselement 19 in das Auslassventil 15 mündet. Außerdem sind in dem Schmelzverteilergehäuse 13 ein Belüftungskanal 21 und ein Drainagekanal 22 ausgebildet, wobei der Belüftungskanal 21 in das Einlassventil 14 mündet und wobei der Drainagekanal 22 in das Auslassventil 15 mündet.

In Figur 1 befinden sich das Einlassventil 14 und das Auslassventil 15 in einer Stellung die dem Filterbetrieb der Vorrichtung 1 entspricht. Im Filterbetrieb wird über den Einlasskanal 16 zu filternde Kunststoffschmelze in die Vorrichtung 1 zugeführt, wodurch sich eine Filterströmung über das Einlassventil 14, den Zuführkanal 32, den Schmelzekanal 20, den Hohlraum 3, durch die Filterstrümpfe 7 und die Öffnungen der Wände der Filterträger 6 hindurch, weiter über den Sammelkanal 10, den Abführkanal 33, dem Auslassventil 15 in den Auslasskanal 18 ausbildet, wobei die Filterung der Kunststoffschmelze beim Durchtritt der Kunststoffschmelze durch die Filterstrümpfe 7 erfolgt. Die Filterströmung durch einen Filterstrumpf 7 und die Öffnungen einer Wand eines Filterträgers 6 ist in Figur 1 durch Pfeil 23 angedeutet. Da sowohl der Sammelkanal 10 als auch der Schmelzekanal 20 in der Wandung 31 ausgebildet sind, wird der Hohlraum 3 im Filterbetrieb im Wesentlichen in umgekehrter Richtung zu den Innenräumen 8 der Filterkerzen 5 durch die Kunststoffschmelze durchströmt. Infolgedessen wird die Vorrichtung 1 im Gegenstrom betrieben und kann somit sehr kompakt ausgebildet werden. Während des Filterbetriebs wird der Filterkanister 2 durch den Heizbecher 12 auf einer konstanten Temperatur gehalten um eine möglichst geringe Viskosität der Kunststoffschmelze zu gewährleisten.

Figur 2 zeigt die Ausführungsvariante der Vorrichtung 1 gemäß Figur 1 entlang eines Schnitts A-A.

Figur 3 zeigt die Ausführungsvariante der Vorrichtung 1 gemäß Figur 1 entlang eines Schnitts B-B.

Figuren 4 bis 7 zeigen die Ausführungsvariante der Vorrichtung 1 gemäß Figur 1 in verschiedenen Konfigurationen beim Wechseln der Filterstrümpfe 7 in schematischen Schnittdarstellungen. Zum Wechseln der Filterstümpfe 7 wird zuerst der Heizbecher 12 von dem Filterkanister 2 abgenommen. In weiterer Folge wird die Zufuhr von Kunststoffschmelze zur Vorrichtung 1 und somit der Filterbetrieb durch Umschalten des Einlassventils 14 von einer den Einlasskanal 16 und den Schmelzekanal 20 verbindenden Stellung in eine den Belüftungskanal 21 und den Schmelzekanal 20 verbindenden Stellung unterbrochen. Im nächsten Schritt wird das Auslassventil 15 von einer den Auslasskanal 18 und den Sammelkanal 10 verbindenden Stellung in eine den Drainagekanal 22 und den Sammelkanal 10 verbindenden Stellung umgeschaltet. Siehe dazu Figur 4. Das Umschalten von Einlassventil 14 und dem Auslassventil 15 kann auch gleichzeitig erfolgen. Durch eine Zufuhr von mit Druck beaufschlagtem Gas, zum Beispiel Luft, durch den Belüftungskanal 21 werden der Hohlraum 3 und die Innenräume 8 der Filterkerzen 5 frei gespült, wobei die Kunststoffschmelze aus dem Drainagekanal 22 in einen an den Drainagekanal 22 direkt oder über eine Leitung angeschlossenen nicht dargestellten Abführbehälter gedrückt wird.

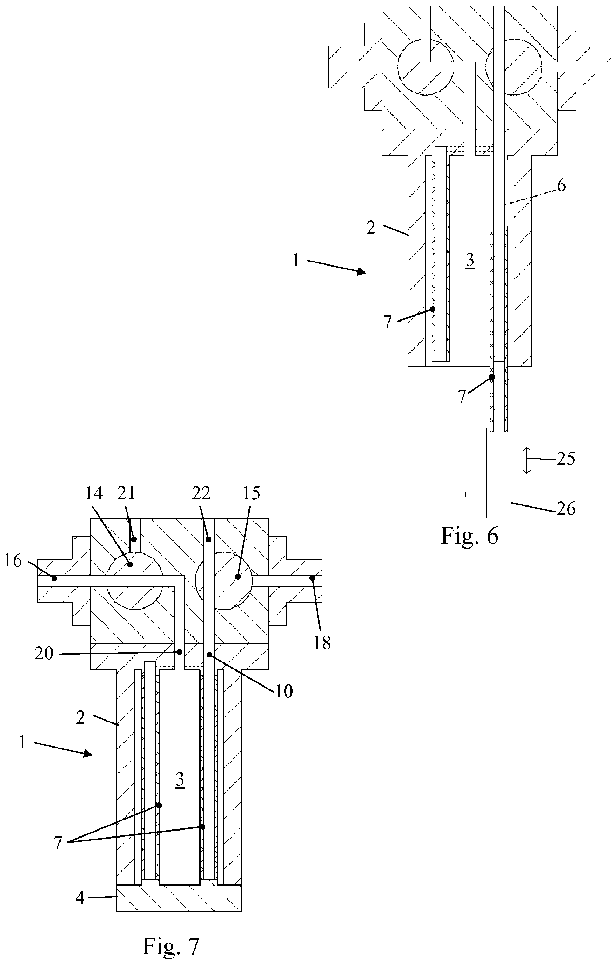

In weiterer Folge wird der Deckel 4 von dem Filterkanister 2 abgeschraubt und abgenommen, wodurch die Filterstrümpfe 7 nicht mehr auf den Filterträgern 6 fixiert sind und mittels eines Werkzeugs 26 axial in Richtung des Pfeils 25 von den Filterträgern 6 gezogen und aus dem Hohlraum 3 entfernt werden können. Siehe dazu Figur 5 und Figur 6. Die Dichtungen 11 werden entweder gleich nach Abnahme des Deckels 4 von den Filterstrümpfen 7 entfernt oder gleichzeitig mit den Filterstrümpfen 7 durch das Werkzeug 26 entfernt. Wenn erforderlich kann in diesem Zustand zusätzlich eine Reinigung des Hohlraums 3 erfolgen. Anschließend werden neue oder gereinigte Filterstrümpfe 7 auf die Filterträger 6 mittels des Werkzeugs 26 aufgebracht. Vorteilhaft werden die Filterstrümpfe 7 in vorgewärmten Zustand auf die Filterträger 6 mittels des Werkzeugs 26 aufgebracht.

Nach dem Aufbringen der neuen oder gereinigten Filterstrümpfe 7 werden neue oder gereinigte Dichtungen 11 an den Filterstrümpfen 7 oder im Deckel 4 in entsprechenden nicht dargestellten Nuten angeordnet und die Dichtungen 11 und die Filterstrümpfe 7 werden wieder durch Aufsetzen des Deckels 4 zwischen dem Deckel 4 und den Filterträgern 6 fixiert. Siehe dazu Figur 7. In weiterer Folge wird das Einlassventil 14 wieder in die Stellung in der der Einklasskanal 16 und der Schmelzekanal 20 verbunden sind umgeschaltet und der Hohlraum 3 wieder mit Kunststoffschmelze gefüllt. Sobald aus dem Drainagekanal 22 gefilterte Kunststoffschmelze heraus läuft ist das in der Vorrichtung 1 zum Freispülen des Hohlraums 3 und der Innenräume 8 der Filterkerzen 5 genutzte Gas entwichen und das Auslassventil 15 wird in die Stellung in der der Auslasskanal 18 und der Sammelkanal 10 verbunden sind umgeschaltet. Die Vorrichtung 1 befindet sich wieder im Filterbetrieb.

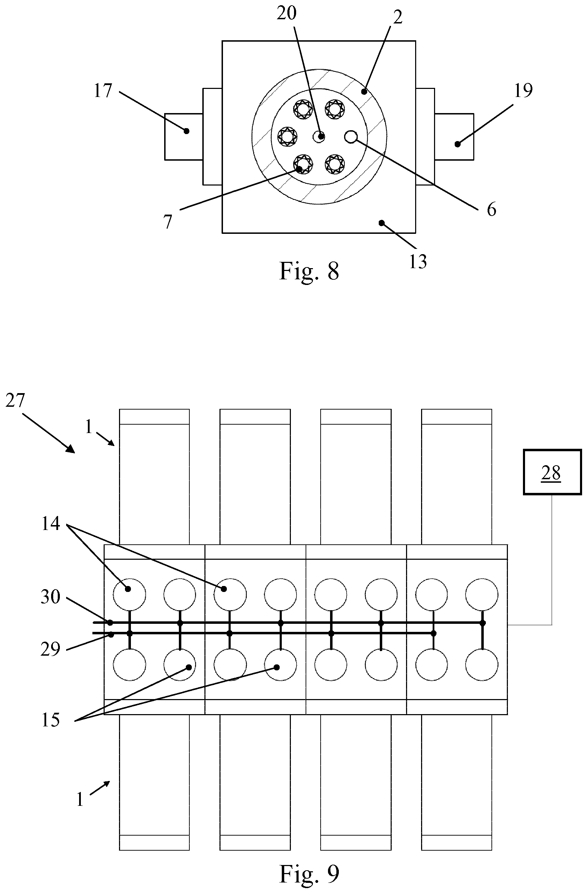

Figur 8 zeigt die Ausführungsvariante der Vorrichtung 1 gemäß Figur 1 bei entferntem Heizbecher 12 und abgenommenem Deckel 4 von unten, wobei mittels des Werkzeugs 26 bereits ein Filterstrumpf 7 von einem Filterträger 6 entfernt wurde.

Figur 9 zeigt eine Ausführungsvariante eines erfindungsgemäßen Systems 27 mit acht Vorrichtungen 1 gemäß Figur 1 in einer schematischen Darstellung. Das System 27 umfasst ferner eine durch einen Computer oder einen Mikrocontroller gebildete Steuereinheit 28, die mit allen acht Vorrichtungen 1 zum Austausch von Daten verbunden ist. Sämtliche Einlasskanäle 16 der Vorrichtungen 1 sind mit einer Zuführleitung 29 verbunden und sämtliche Auslasskanäle 18 der Vorrichtungen 1 sind mit einer Abführleitung 30 verbunden. Auch die Belüftungskanäle 21 und die Drainagekanäle 22 sind jeweils durch eine Leitung miteinander gekoppelt, wobei die Leitungen aus Gründen der besseren Übersichtlichkeit in Figur 9 nicht dargestellt sind. Die Steuereinheit 28 steuert die Funktion der Einlassventile 14 und der Auslassventile 15 der Vorrichtungen 1 und steuert diese vorteilhaft im Betrieb des Systems 27 vollautomatisch an. Durch die Steuereinheit 28 gesteuert können einzelne Vorrichten 1 zugeschaltet oder abgeschaltet werden. Dies erfolgt entweder zur Reinigung von einzelnen Vorrichtungen 1 oder um eine Gesamtfiltrationsfläche des Systems 27 an einen Volumenstrom und Verunreinigungsgrad der Kunststoffschmelze anzupassen. Aus Gründen der Übersichtlichkeit sind auch die Heizbecher 12 der einzelnen Vorrichtung 1 in Figur 9 nicht dargestellt.

## Patentansprüche

1. Vorrichtung (1) zur Filtration von Kunststoffschmelze mit einem Einlassventil (14), einem Auslassventil (15) und einem Filterkanister (2), in welchem ein mittels eines abnehmbaren Deckels (4) verschließbarer Hohlraum (3) ausgebildet ist, in den ein Schmelzekanal (20) mündet, wobei in dem Filterkanister (2) eine Vielzahl von Filterkerzen (5) angeordnet sind, welche jeweils durch einen Filterträger (6) und einen Filterstrumpf (7) gebildet sind, wobei der Filterträger (6) an dem Filterkanister (2) verankert ist und eine Wand mit einer Vielzahl an Öffnungen umfasst, welche Wand einen Innenraum (8) definiert, der durch einen Auslass (9) in einen Sammelkanal (10) mündet, wobei der Filterstrumpf (7) die Öffnungen des Filterträgers (6) überdeckt, wobei der Schmelzekanal (20) an das Einlassventil (14) anschließt und über das Einlassventil (14) mit einem Einlasskanal (16) in Fluidkommunikation bringbar ist und wobei der Sammelkanal (10) an das Auslassventil (15) anschließt und über das Auslassventil (15) mit einem Auslasskanal (18) in Fluidkommunikation bringbar ist, und wobei der Deckel (4) die Filterstrümpfe (7) auf den Filterträgern (6) fixiert, **dadurch gekennzeichnet, dass** die Vorrichtung (1) einen mit dem Einlassventil (14) kommunizierenden Belüftungskanal (21) und einen mit dem Auslassventil (15) kommunizierenden Drainagekanal (22) aufweist, wobei der Schmelzekanal (20) über das Einlassventil (14) mit dem Belüftungskanal (21) verbindbar ist und der Sammelkanal (10) über das Auslassventil (15) mit dem Drainagekanal (22) verbindbar ist.

2. Vorrichtung (1) nach Anspruch 1, wobei die Filterträger (6) im Hohlraum (3) gleichförmig voneinander beabstandet angeordnet sind und vorzugsweise von der Mündung (24) des Schmelzekanals (20) in den Hohlraum den gleichen Abstand aufweisen.

3. Vorrichtung (1) nach einem der vorherigen Ansprüche, wobei das Einlassventil (14) und das Auslassventil (15) durch Dreh- und/oder Schiebeventile gebildet sind.

4. Vorrichtung (1) nach einem der vorherigen Ansprüche, wobei der Filterkanister (2) über einen den Filterkanister (2) in einem Abstand umgebenden Heizbecher (12) kontaktlos beheizbar ist.

5. Vorrichtung (1) nach einem der vorherigen Ansprüche, wobei der Schmelzekanal (20) und der Sammelkanal (10) in zumindest einer Wandung des Filterkanisters (2) im Bereich einer Seite des Filterkanisters (2) ausgebildet sind.

6. Vorrichtung (1) nach einem der vorherigen Ansprüche, wobei die Filterkerzen (5) so ausgerichtet sind, dass bei abgenommenem Deckel (4) die Filterstrümpfe (7) axial aus dem Hohlraum (3) entfernbar sind.

7. Vorrichtung (1) nach einem der vorherigen Ansprüche, wobei die Filterkerzen (5) ausgebildet sind Partikel im Wesentlichen größer als 36µm, vorzugsweise im Wesentlichen größer als 25 µm oder noch bevorzugter größer als 15 µm, aus der Kunststoffschmelze im Filterbetrieb der Vorrichtung (1) herauszufiltern.

8. Vorrichtung (1) nach einem der vorherigen Ansprüche, wobei die Wand des Filterträgers (6) aus einem Lochblechmaterial gebildet ist.

9. Vorrichtung (1) nach einem der vorherigen Ansprüche, wobei die Filterkerzen (5) aus Metall, Kunststoff oder Keramik gebildet sind.

10. Vorrichtung (1) nach einem der vorherigen Ansprüche, wobei die Vorrichtung (1) Dichtungen (11) aufweist, welche an den Filterstrümpfen (7) fixierbar sind und bei am Filterkanister (2) aufgesetzten Deckel (4) zwischen Filterstrümpfen (7) und dem Deckel (4) angeordnet sind.

11. System (27) mit zumindest zwei Vorrichtungen (1) gemäß einem der Ansprüche 1 bis 10, wobei das System (27) eine Steuereinheit (28) aufweist, die die Einlassventile (14) und die Auslassventile (15) der zumindest zwei Vorrichtungen (1) steuert.

12. System (27) nach Anspruch 11, wobei eine Gesamtfiltrationsfläche des Systems (27) durch Zuschalten von einzelnen Vorrichtungen (1) oder Abschalten von einzelnen Vorrichtungen (1) veränderbar ist.

13. Verfahren zum Austausch von Filterkerzen (5) einer Vorrichtung (1) gemäß einem der Ansprüche 1 bis 10 **gekennzeichnet durch** folgende Schritte:
a) Unterbrechen einer Zufuhr von Kunststoffschmelze in die Vorrichtung (1) durch Umschalten des Einlassventils (14) von einer den Einlasskanal (16) und den Schmelzekanal (20) verbindenden Stellung in eine den Belüftungskanal (21) und den Schmelzekanal (20) verbindenden Stellung;
b) Umschalten des Auslassventils (15) von einer den Auslasskanal (18) und den Sammelkanal (10) verbindenden Stellung in eine den Drainagekanal (22) und den Sammelkanal (10) verbindenden Stellung;
c) Freispülen der Vorrichtung (1) durch die Zufuhr von Gas durch den Belüftungskanal (21);
d) Öffnen des Deckels (4);
e) Austauschen der Filterstrümpfe (7);
f) Schließen des Deckels (4);
g) Umschalten des Einlassventils (14) in die Stellung in der der Einlasskanal (16) und der Schmelzekanal (20) verbunden sind; und
h) Nach Entweichen des noch im Hohlraum (3) befindlichen Gases durch den Drainagekanal (22) Umschalten des Auslassventils (15) in die Stellung in der der Auslasskanal (18) und der Sammelkanal (10) verbunden sind.

14. Verfahren nach Anspruch 13, **dadurch gekennzeichnet, dass** zwischen Schritt d) und e) der Filterkanister (2) manuell mittels eines Reinigungswerkzeugs von Schmelzeresten gereinigt wird.

## Claims

1. A device (1) for filtering molten plastic having an inlet valve (14), an outlet valve (15) and a filter canister (2), in which a cavity (3) is formed that is closeable by means of a removable cover (4) and into which a melt channel (20) opens, wherein in the filter canister (2), a plurality of filter candles (5) is arranged, each being formed by a filter carrier (6) and a filter sock (7), wherein the filter carrier (6) is fixed to the filter canister (2) and comprises a wall with a plurality of openings, which wall defines an interior space (8) that opens to a collector channel (10) through an outlet (9), wherein the filter sock (7) covers the openings of the filter carrier (6), wherein the melt channel (20) in connected to the inlet valve (14) and may be brought into fluid communication with an inlet channel (16) via the inlet valve (14) and wherein the collector channel (10) is connected to the outlet valve (15) and may be brought into fluid communication with an outlet channel (18) via the outlet valve (15), and wherein the cover (4) fixes the filter socks (7) on the filter carriers (6), **characterized in that** the device (1) has a ventilation channel (21) communicating with the inlet valve (14) and a drainage channel (22) communicating with the outlet valve (15), wherein the melt channel (20) is connectable with the ventilation channel (21) via the inlet valve (14) and the collector channel (10) is connectable with the drainage channel (22) via the outlet valve (15).

2. The device (1) according to claim 1, wherein the filter carriers (6) are arranged in the cavity (3) at uniform distances from one another and preferably are at the same distance from the entry point (24) of the melt channel (20) into the cavity.

3. The device (1) according to any one of the preceding claims, wherein the inlet valve (14) and the outlet valve (15) are formed by rotary and/or slide valves.

4. The device (1) according to any one of the preceding claims, wherein the filter canister (2) is heatable contactlessly via a heating cup (12) surrounding the filter canister (2) at a distance.

5. The device (1) according to any one of the preceding claims, wherein the melt channel (20) and the collector channel (10) are formed in at least one wall of the filter canister (2) in the area of a side of the filter canister (2).

6. The device (1) according to any one of the preceding claims, wherein the filter candles (5) are oriented so that the filter socks (7) are axially removable from the cavity (3) when the cover (4) is removed.

7. The device (1) according to any one of the preceding claims, wherein the filter candles (5) are formed to filter particles essentially larger than 36 µm, preferably essentially larger than 25 µm or even more preferably larger than 15 µm, from the plastic melt during filtering operation of the device (1).

8. The device (1) according to any one of the preceding claims, wherein the wall of the filter carrier (6) is formed from a perforated sheet material.

9. The device (1) according to any one of the preceding claims, wherein the filter candles (5) are formed of metal, plastic or ceramic.

10. The device (1) according to any one of the preceding claims, wherein the device (1) has seals (11) that are fixable to the filter socks (7) and are arranged between the filter socks (7) and the cover (4) when the cover (4) is in place on the filter canister (2).

11. A system (27) with at least two devices (1) according to one of the claims 1 to 10, wherein the system (27) has a control unit (28) that controls the inlet valves (14) and the outlet valves (15) of the at least two devices (1).

12. The system (27) according to claim 11, wherein a total filtration surface of the system (27) is changeable by switching on individual devices (1) or switching off individual devices (1).

13. A method for replacing filter candles (5) of a device (1) according to one of the claims 1 to 10, **characterized by** the following steps:
a) interrupting the supply of plastic melt to the device (1) by switching the inlet valve (14) from a position connecting the inlet channel (16) and the melt channel (20) to a position connecting the ventilation channel (21) and the melt channel (20);
b) switching the outlet valve (15) from a position connecting the outlet channel (18) and the collector channel (10) to a position connecting the drainage channel (22) and the collector channel (10);
c) flushing the device (1) free by supplying gas through the ventilation channel (21);
d) opening the cover (4);
e) replacing the filter socks (7);
f) closing the cover (4);
g) switching the inlet valve (14) to the position in which the inlet channel (16) and the melt channel (20) are connected; and
h) after the gas remaining in the cavity (3) has escaped through the drainage channel (22), switching the outlet valve (15) to the position in which the outlet channel (18) and the collector channel (10) are connected.

14. The method according to claim 13, **characterized in that** between step d) and e), the filter canister (2) is cleaned from melt residues by means of a cleaning tool.

## Revendications

1. Dispositif (1) pour la filtration d'une masse fondue de plastique comprenant une soupape d'admission (14), une soupape de sortie (15) et un bidon filtrant (2), dans lequel il est prévu au moins une cavité (3) qui peut être fermée à l'aide d'un couvercle amovible (4) et à l'intérieur de laquelle débouche un canal à masse fondue (20), dans lequel une pluralité de bougies filtrantes (5) sont disposées à l'intérieur du bidon filtrant (2), lesdites bougies étant formées respectivement par un porte-filtre (6) et un manchon filtrant (7), dans lequel le porte-filtre (6) est ancré sur le bidon filtrant (2) et présente une paroi comportant une pluralité d'ouvertures, ladite paroi définissant un espace intérieur (8) qui débouche par une sortie (9) à l'intérieur d'un canal de collecte (10), dans lequel le manchon filtrant (7) recouvre les ouvertures du porte-filtre (6), dans lequel le canal à masse fondue (20) est raccordé à la soupape d'admission (14) et peut être amené en communication fluidique avec un canal d'admission (16) par l'intermédiaire de la soupape d'admission (14) et dans lequel le canal de collecte (10) est raccordé à la soupape de sortie (15) et peut être amené en communication fluidique avec un canal de sortie (18) par l'intermédiaire de la soupape de sortie (15) et dans lequel le couvercle (4) fixe les manchons filtrants (7) sur les porte-filtres (6), **caractérisé en ce que** le dispositif (1) comprend un canal d'aération (21) qui communique avec la soupape d'admission (14) et un canal de drainage (22) qui communique avec la soupape de sortie (15), dans lequel le canal à masse fondue (20) peut être relié au canal d'aération (21) par l'intermédiaire de la soupape d'admission (14) et le canal de collecte (10) peut être relié au canal de drainage (22) par l'intermédiaire de la soupape de sortie (15).

2. Dispositif (1) selon la revendication 1, dans lequel les porte-filtres (6) sont disposés à distance les uns des autres de manière uniforme à l'intérieur de la cavité (3) et présentent de préférence la même distance par rapport à l'embouchure (24) du canal à masse fondue (20) à l'intérieur de la cavité.

3. Dispositif (1) selon l'une quelconque des revendications précédentes, dans lequel la soupape d'admission (14) et la soupape de sortie (15) sont formées par des soupapes rotatives et/ou coulissantes.

4. Dispositif (1) selon l'une quelconque des revendications précédentes, dans lequel le bidon filtrant (2) peut être chauffé sans contact par l'intermédiaire d'un godet chauffant (12) qui entoure le bidon filtrant (2) à une certaine distance.

5. Dispositif (1) selon l'une quelconque des revendications précédentes, dans lequel le canal à masse fondue (20) et le canal de collecte (10) sont réalisés dans au moins une paroi du bidon filtrant (2) dans la zone d'une face du bidon filtrant (2).

6. Dispositif (1) selon l'une quelconque des revendications précédentes, dans lequel les bougies filtrantes (5) sont orientées de telle sorte que, lorsque le couvercle (4) est ôté, les manchons filtrants (7) puissent être retirés axialement hors de la cavité (3).

7. Dispositif (1) selon l'une quelconque des revendications précédentes, dans lequel les bougies filtrantes (5) sont conçues de manière à filtrer des particules d'une taille sensiblement supérieure à 36 µm, de préférence sensiblement supérieure à 25 µm ou de préférence encore supérieure à 15 µm, de la masse fondue de plastique lorsque le dispositif (1) se trouve en mode filtration.

8. Dispositif (1) selon l'une quelconque des revendications précédentes, dans lequel la paroi du porte-filtre (6) est formée à partir d'un matériau en tôle perforée.

9. Dispositif (1) selon l'une quelconque des revendications précédentes, dans lequel les bougies filtrantes (5) sont formées à partir de métal, de matière plastique ou de céramique.

10. Dispositif (1) selon l'une quelconque des revendications précédentes, dans lequel le dispositif (1) comprend des joints (11), lesdits joints pouvant être fixés sur les manchons filtrants (7) et, lorsque le couvercle (4) est posé sur le bidon filtrant (2), lesdits joints étant disposés entre les manchons filtrants (7) et le couvercle (4).

11. Système (27) avec au moins deux dispositifs (1) selon l'une quelconque des revendications 1 à 10, dans lequel le système (27) comprend une unité de commande (28) pour commander les soupapes d'admission (14) ainsi que les soupapes de sortie (15) desdits au moins deux dispositifs (1).

12. Système (27) selon la revendication 11, dans lequel une surface de filtration entière du système (27) peut être modifiée par l'activation de dispositifs individuels (1) ou par la désactivation de dispositifs individuels (1).

13. Procédé pour remplacer les bougies filtrantes (5) d'un dispositif (1) selon l'une quelconque des revendications 1 à 10, **caractérisé en ce qu'**il comprend les étapes suivantes :
a) interrompre une arrivée de masse fondue de plastique à l'intérieur du dispositif (1) par le basculement de la soupape d'admission (14) à partir d'une position qui relie le canal d'admission (16) au canal à masse fondue (20) jusque dans une position qui relie le canal d'aération (21) au canal à masse fondue (20) ;
b) basculer la soupape de sortie (15) à partir d'une position qui relie le canal de sortie (18) au canal de collecte (10) jusque dans une position qui relie le canal de drainage (22) au canal de collecte (10) ;
c) rincer le dispositif (1) par une arrivée de gaz à travers le canal d'aération (21) ;
d) ouvrir le couvercle (4) ;
e) remplacer les manchons filtrants (7) ;
f) fermer le couvercle (4) ;
g) basculer la soupape d'admission (14) dans la position dans laquelle le canal d'admission (16) et le canal à masse fondue (20) sont reliés ; et
h) après l'échappement du gaz qui se trouve encore à l'intérieur de la cavité (3) par l'intermédiaire du canal de drainage (22), basculer la soupape de sortie (15) dans la position dans laquelle le canal de sortie (18) et le canal de collecte (10) sont reliés.

14. Procédé selon la revendication 13, **caractérisé en ce que**, entre l'étape d) et l'étape e), le bidon filtrant (2) est débarrassé manuellement des restes de masse fondue à l'aide d'un outil de nettoyage.
